# EUROPÄISCHE PATENTSCHRIFT

(11) **EP 1 925 388 B1**
(45) Veröffentlichungstag und Bekanntmachung des Hinweises auf die Patenterteilung: **11.07.2012**
(21) Anmeldenummer: 07016041.1
(22) Anmeldetag: 16.08.2007
(51) Int. Cl.: B23D 45/06, B27G 19/02

(54) **Tischkreissäge**
Circular saw bench
Scie circulaire à table

(30) Priorität: 22.11.2006 DE 102006055018
(43) Veröffentlichungstag der Anmeldung: 28.05.2008
(73) Patentinhaber: Metabowerke GmbH, 72602 Nürtingen (DE)
(72) Erfinder: Ruf, Hans, 72649 Wolfschlugen (DE); Schulz, Manfred, 72622 Nürtingen (DE)
(74) Vertreter: Raunecker, Klaus Peter

(56) Entgegenhaltungen:
- DE-B3- 10 348 587
- GB-A- 662 756
- NL-A- 6 703 368
- US-A- 1 563 317
- US-A- 1 594 772
- US-A1- 2001 035 081

## Beschreibung

Die Erfindung betrifft eine Tischkreissäge mit einem Arbeitstisch gemäß dem Oberbegriff des Anspruchs 1.

Eine solche Tischkreissäge ist aus GB 662 756 A bekannt.

Schutzhauben für Tischkreissägen sind im Stand der Technik vielfach bekannt.

So offenbart beispielsweise die DE 103 48 587 B3 eine Tischkreissäge mit einer Schutzhaube für das Sägeblatt sowie einer seitlich an der Schutzhaube angebrachten Abdeckplatte. Hierbei soll erreicht werden, dass das Sägeblatt auch seitlich durch die Abdeckplatte noch weiter abgedeckt wird, um auch den unteren Teil des Sägeblattes abzudecken.

Darüber hinaus offenbart beispielsweise die US 6,405,624 B2 eine Schutzhaube, die von einer ersten in eine zweite Position verschwenkt werden kann, wobei in der zweiten Position der Bearbeitungsbereich eines Tischkreissägenblattes nicht durch die Schutzhaube überdeckt ist. Eine ähnliche Gestaltung zeigt auch die DE 202 09 464 U1, die eine Tischkreissägemaschine beschreibt, bei der am Spaltkeil eine höhenverstellbar angebrachte Schutzhaube ausgeführt ist, die in tiefster Stellung den über den Tisch hinausragenden Teil des Kreissägeblattes im Wesentlichen vollständig umfasst, wobei die Höhenverstellbarkeit der Schutzhaube so gestaltet ist, dass die Unterkante der Schutzhaube stets parallel zur Tischfläche ausgerichtet bleibt. Im Gegensatz dazu beschreibt die vorstehende US 6,405,624 B2 eine Schutzhaube, bei der auch eine rotatorische Verschwenkung der Schutzhaube ermöglicht ist.

Der zitierte Stand der Technik weist den Nachteil auf, dass in einer Ruhestellung die Schutzhaube schnell durch auf sie einwirkende Querkräfte beschädigt werden kann, da das freie Ende der Schutzhaube in diesem Fall den Querkräften ausweicht und es so zu einem Bruch oder einer Verformung der Schutzhaube kommen kann.

Der Erfindung stellt sich daher die Aufgabe, eine Tischkreissäge der gattungsgemäßen Art bereitzustellen, bei der die auf die Schutzhaube wirkenden Querkräfte in der Ruhestellung nicht zur Verformung der Schutzhaube bzw. deren Befestigung am Spaltkeil führen.

Die Erfindung löst diese Aufgabe durch eine Tischkreissäge, bei der in der Ruhestellung ein Bereich des freien Endes der Schutzhaube in eine korrespondierende Aussparung im Arbeitstisch eingreift.

D. h., die Schutzhaube ist so gestaltet, dass in ihrer vollkommen abgesenkten, nämlich der Ruhestellung entsprechenden Position, in der die Schutzhaube normalerweise gegen den Arbeitstisch anliegt, die Schutzhaube einen Bereich aufweist, der in eine hierfür vorgesehene Aussparung des Arbeitstisches eintritt, so dass das freie Ende der Schutzhaube hinsichtlich auf die Schutzhaube wirkender Querkräfte fixiert ist. Das bedeutet, die Schutzhaube liegt in der abgesenkten Stellung nicht auf dem Arbeitstisch auf, sondern taucht zumindest bereichsweise in diesen ein.

Dabei kann die Schutzhaube so ausgestaltet sein, dass sie im Wesentlichen ein U-förmiges Profil aufweist, das die Oberkante des Zahnkranzes des Sägeblatts, aber auch die beiden Seitenflächen des Sägeblatts abdeckt. Darüber hinaus kann vorgesehen sein, dass am freien Ende der Schutzhaube das U-förmige Profil ebenfalls verschlossen ist, so dass in der Ruhestellung das Sägeblatt hinsichtlich seines Zahnkranzes vollständig durch die Schutzhaube überdeckt wird. Alternativ kann die Schutzhaube jedoch in Richtung des freien Endes über den Zahnkranz des Sägeblattes hinausragen. Darauf kann gegebenenfalls verzichtet werden, das freie Ende der Schutzhaube bezüglich des U-förmigen Profils zu verschließen.

Es kann nach einer ersten Ausgestaltung vorgesehen sein, dass die Schutzhaube einteilig ausgebildet ist. Die einteilige Ausbildung besitzt den Vorteil, dass die Schutzhaube vergleichsweise einfach gestaltet werden kann. Die Schutzhaube wird dann hinsichtlich ihrer Gesamtheit um die Schwenkachse, die am Spaltkeil festgelegt ist, verschwenkt.

Alternativ kann auch vorgesehen sein, dass die Schutzhaube zweiteilig ausgebildet ist, wobei der erste Teil verschwenkbar am Spaltkeil gelagert ist und im Wesentlichen der einteiligen Schutzhaube entspricht. Der zweite Teil ist dann um eine parallel zur Verschwenkachse des ersten Teils verlaufende Achse verschwenkbar und diese befindet sich am freien Ende des ersten Teils der Schutzhaube. Dabei kann der Bereich, der in der Ruhestellung in den Arbeitstisch eingreift, am ersten und/oder am zweiten Teil der Schutzhaube vorgesehen sein. Dabei kann eine Verschwenkung des zweiten Teils dergestalt erfolgen, dass der zweite Teil in den ersten Teil hineinverschwenkt wird, um einen Schnittbereich des Sägeblattes zur Bearbeitung freizumachen. Eine Gestaltung mit einem beweglichen zweiten vorderen Teil der Schutzhaube ermöglicht ein besseres Umschließen des Schnittbereichs, wobei dies insbesondere auch Vorteile bietet, sofern eine Staubabsaugeinrichtung vorgesehen ist, die an der Schutzhaube angebracht ist, vorzugsweise im Bereich der Anlenkung der Schutzhaube am Spaltkeil, wobei bei Vorsehung eines zweiten verschwenkbaren Teils der Schutzhaube durch die bessere Umschließung des Sägeblatts die Absaugung des im hinteren, nämlich dem Schnittbereich abgewandten Teil des Zahnkranzes, aufgewirbelten Staubs verbessert werden kann und so die Spanabfuhr durch die Staubabsaugung verbessert ist.

Besonders bevorzugt kann vorgesehen sein, dass die Schutzhaube zumindest teilweise aus Kunststoff besteht und vorzugsweise zumindest teilweise transparent ist. Dabei ist es besonders vorteilhaft, wenn diese aus einem zerspanbaren und schlagzähen Kunststoff besteht. Sofern diese zumindest teilweise transparent ausgebildet ist, ermöglicht eine solche Gestaltung einen guten Einblick auf das Werkzeug sowohl in der Ruhe- als auch in der Bearbeitungssituation. Insbesondere können die Teile der Schutzhaube aus PC bestehen.

Vorteilhaft kann vorgesehen sein, dass die Schutzhaube oder der zweite Teil der Schutzhaube an ihrem freien Ende eine Anlaufschräge aufweist. Hierdurch wird eine Verschwenkbewegung der Schutzhaube bzw. des Teils der Schutzhaube erleichtert, sofern ein zu bearbeitendes Werkstück gegen die Schutzhaube geschoben wird. Die Schutzhaube bewegt sich dann unter dem Druck des Werkstücks aus der Ruhestellung in eine Bearbeitungsstellung, wobei vorgesehen sein kann, dass die Anlaufschräge sowohl gerade als auch gekrümmt ausgebildet sein kann. Die Schutzhaube kann dabei insbesondere aufgrund ihres Eigengewichts, aber auch zusätzlich beispielsweise durch Federkraft in Richtung auf die Ruhestellung vorbelastet sein, um so stets nur den notwendigen Schnittbereich des Sägeblattes freizugeben und nach erfolgter Bearbeitung unmittelbar wieder in die Ruhestellung zurückzuverschwenken.

Dabei können die Schutzhaube sowie die beiden Teile der Schutzhaube verschiedene Formen aufweisen. Insbesondere wird die Schutzhaube jedoch eine polygone Form besitzen, die sich insbesondere ausgehend von ihrem freien Ende zu ihrem an dem Spaltkeil gelagerten Ende hin verjüngt. Insbesondere kann eine Form entsprechend der Form eines Schwerts eines Segelboots als Form der Schutzhaube in einer Seitenansicht vorgesehen sein. Weiterhin kann vorgesehen sein, dass das Sägeblatt relativ zum Arbeitstisch in der Höhe und/oder der Neigung verstellbar ist. Hier kann vorgesehen sein, dass die Schutzhaube so weit oberhalb am Spaltkeil angeordnet und verschwenkbar gelagert ist, dass die verschiedenen Einstellmöglichkeiten des Sägeblattes zugelassen werden.

Weitere Vorteile und Merkmale der Erfindung ergeben sich aus den übrigen Anmeldungsunterlagen. Die Erfindung soll im Folgenden anhand einer Zeichnung näher erläutert werden. Dabei zeigt:
- Figur 1: eine Seitenansicht einer erfindungsgemäßen Tischkreissäge in einer Betriebsstellung;
- Figur 2: eine Ansicht von vorne der Tischkreissäge gemäß Figur 1 in einer Ruhestellung;
- Figur 3: eine Seitenansicht einer weiteren Ausgestaltung einer erfindungsgemäßen Tischkreissäge in einer Ruhestellung und
- Figur 4: die Tischkreissäge gemäß Figur 3 in einer Ansicht von vorne im Schnitt.

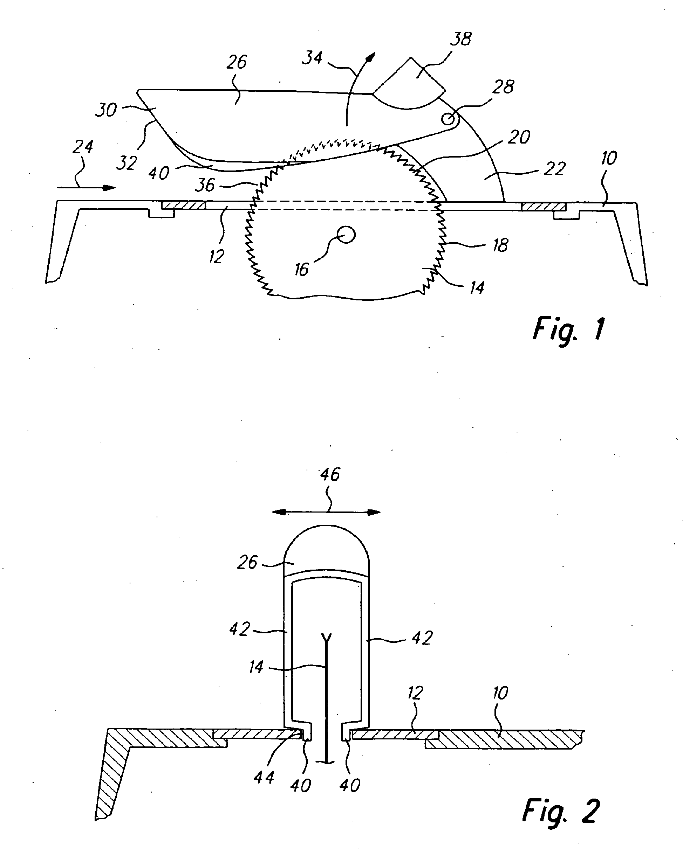

Figur 1 zeigt eine erfindungsgemäße Tischkreissäge mit einem Arbeitstisch 10, der eine Tischeinlage 12 mit einem Schlitz zum Durchtritt eines Sägeblattes 14 umfasst. Das Sägeblatt 14 ist unterhalb des Arbeitstisches 10 um eine Achse 16 drehbar gelagert. Es umfasst auf seinem äußeren Umfang einen Zahnkranz 18, wobei durch den Anteil des Sägeblatts 14, der oberhalb des Arbeitstisches 10 angeordnet ist, ein Bearbeitungsabschnitt 20 gebildet wird. Das Sägeblatt 14 ist mittels eines nicht dargestellten Motors drehend antreibbar. Auf dem Arbeitstisch 10 ist darüber hinaus ein Spaltkeil 22 angebracht, der der Spaltung von bearbeiteten Werkstücken dient. Die Bearbeitungsrichtung bzw. Zufuhrrichtung für Werkstücke ist hierbei mit dem Pfeil 24 angedeutet. Die Werkstücke werden in Pfeilrichtung 24 gegen das Sägeblatt 14 geschoben und durch das Sägeblatt getrennt, wobei eine weitere Aufspaltung dann erfolgt, indem das Werkstück gegen den Spaltkeil 22 läuft und durch diesen in zwei Hälften geteilt wird.

Zum Schutz eines Bearbeiters an einer entsprechenden Tischkreissäge ist darüber hinaus eine Schutzhaube 26 vorgesehen, die am Spaltkeil 22 über eine Achse 28 verschwenkbar gelagert ist. Die Schutzhaube 26 besitzt in der Seitenansicht die Form eines Schwertes eines Segelbootes und verjüngt sich in Richtung der Verschwenkachse 28. An ihrem freien Ende 30 weist die Schutzhaube eine Anlaufschräge 32 auf, die ein Verschwenken der Schutzhaube bei gegen die Schutzhaube 26 zur Anlage kommenden Werkstücken ermöglicht. Während der Bearbeitung wird hierbei die Schutzhaube in Pfeilrichtung 34 um die Achse 28 verschwenkt und gibt so einen Teil eines Schnittbereichs, der in der Zeichnung mit 36 bezeichnet ist, frei, wobei in diesem Bereich das Werkstück dann durch das Sägeblatt bearbeitet werden kann.

Des Weiteren ist an der Schutzhaube 26 eine Staubabsaugeinrichtung 38 vorgesehen, über die durch das Sägeblatt insbesondere dem Schnittbereich gegenüberliegenden Teil des Sägeblatts nach oben und vorn geschleuderter Staub bzw. Feinstaub aufgefangen und abgeführt werden kann.

Figur 2 zeigt nun eine Schnittdarstellung einer Tischkreissäge gemäß Figur 1 in einer Ruhestellung. Gleiche Bauteile sind hierbei mit gleichen Bezugszeichen versehen. Hierbei ist die Schutzhaube 26 in der abgesenkten Darstellung gezeigt. Die Schutzhaube 26 weist einen Bereich, der in Figur 1 mit 40 bezeichnet ist, auf. Der Bereich 40 besteht hierbei in der U-förmigen Querschnittsdarstellung der Schutzhaube in Figur 2 aus einem Teilbereich der beiden Unterkanten der Schutzhaube 26, wobei diese im Bereich 40 einen geringeren Abstand voneinander aufweisen als die beiden Seitenflächen 42 der Schutzhaube. Mit diesem Bereich greift die Schutzhaube 26 nun in den Schlitz 44 der Einlage 12 des Arbeitstisches ein, so dass die Unterkante der Schutzhaube 26 über den Bereich 40 gegen Querbelastungen, die mit dem Pfeil 46 gekennzeichnet sind, stabilisiert wird. Darüber hinaus erfolgt bei bereits wieder abgesenkter Schutzhaube 26, also durch den Schnittbereich hindurchgeführtem Werkstück, ein besserer Abschluss des Sägeblattes durch die Schutzhaube, so dass die Absaugung von aufgewirbeltem Staub, der durch das Sägeblatt 14 nach vorne transportiert wird, verbessert wird.

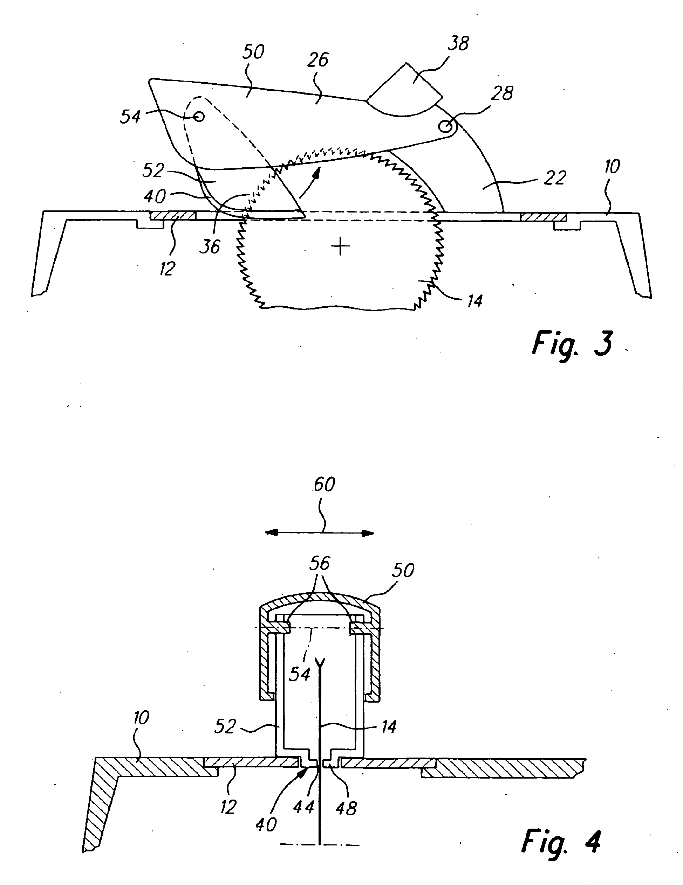

Figur 3 zeigt nun eine weitere Ausgestaltung, wobei auch hier gleiche Bezugszeichen für gleiche Bauteile verwendet worden sind. Der Arbeitstisch ist hierbei entsprechend Figur 1 gestaltet. Die Schutzhaube 26 ist jedoch als zweiteilige Schutzhaube 26 umfassend einen ersten Teil 50 und einen zweiten Teil 52 ausgestaltet. Der erste Teil 50 ist hierbei wiederum am Spaltkeil 22 über eine Verschwenkachse 28 verschwenkbar gelagert. Der erste Teil 50 trägt hierbei auch die Staubabsaugung. Am ersten Teil 50 ist nun der zweite Teil 52 angelenkt, der um eine Achse 54 bezüglich des ersten Teils 50 verschwenkbar gestaltet ist. Der erste 50 und der zweite 52 Teil besitzen jeweils eine U-förmige Querschnittsform, wie insbesondere Figur 4 entnommen werden kann, und besitzt in der Seitenansicht die Form eines Schwertes eines Segelbootes, wobei beide Teile 50 und 52 sich zu ihrer Verschwenkachse 28 bzw. 54 hin verjüngen.

Durch die Vorsehung eines zweiten Teiles 52, der gelenkig am ersten Teil 50 angeordnet ist, kann nun erreicht werden, dass ein noch besserer Abschluss des Sägeblattes 14 gegenüber der Umgebung erreicht wird und so die Staubabsaugung über die Staubabsaugungseinrichtung 38 verbessert werden kann. Darüber hinaus kann so auch bei gleichzeitiger Freigabe des Schnittbereichs 36 dennoch ein möglichst guter Schutz eines Benutzers einer Tischkreissäge realisiert werden. Der zweite Teil 52 der Schutzhaube 26 weist hierbei einen Bereich 40 auf, der in den Schlitz 44 des Einsatzes 12 des Arbeitstisches 10 eintaucht. Figur 4 kann nun die Gestaltung gemäß Figur 3 im Schnitt von vorne umfassend einen ersten Teil 50 einer Schutzhaube 26 und einen zweiten Teil 52 der Schutzhaube 26 entnommen werden. Der zweite Teil 52 der Schutzhaube 26 ist hierbei über zwei Zapfen 56 drehbar am ersten Teil 50 gelagert, wobei die Zapfen 56 die Achse 54 ausbilden. Der Bereich 40, der in den Schlitz 44 eingreift, ist im Gegensatz zu Figur 1 nicht lediglich als Fortsetzung der Schenkel einer U-förmigen Querschnittsgestaltung der Schutzhaube 26 bzw. des Teils 52 ausgestaltet, sondern weist einen Abschnitt 48 auf, der in Richtung des Sägeblatts 14 umgebogen ist. Auf diese Weise kann ein noch besserer Abschluss und eine bessere Abdichtung des Sägeblattes 14 gegenüber der Umgebung erreicht werden. Eine Belastungsrichtung durch Querkräfte insbesondere des ersten Teils 50 ist mit dem Pfeil 60 gekennzeichnet. Durch den Eingriff des zweiten Teils 52 in den Schlitz 44 mit dem Abschnitt 40 kann die gesamte Schutzhaube 26 bestehend aus den beiden Teilen 50 und 52 besser gegen derartige Querbelastungen gesichert werden.

Insgesamt weist die Erfindung damit den Vorteil auf, dass der Zahnkranz möglichst lange geschlossen gehalten werden kann und dass durch den hinteren aufsteigenden Zahnkranz nach vorne geschleuderter Staub bzw. Feinstaub besser aufgefangen und über eine Span- und Staubabsaugung abgeführt werden kann. Darüber hinaus wird durch das Eingreifen des Bereichs 40 in den Tischschlitz 44 die Schutzhaube 26 seitlich erheblich stabilisiert.

## Patentansprüche

1. Tischkreissäge mit einem Arbeitstisch (10), einem drehbar antreibbaren Sägeblatt (14) mit einem Zahnkranz (18), das unterhalb des Arbeitstisches (10) gelagert ist und wobei ein Bearbeitungsabschnitt (20) des Sägeblatts (14) den Arbeitstisch (10) durchgreift sowie einem Spaltkeil (22), der auf dem Arbeitstisch (10) angeordnet ist und an dem eine Schutzhaube (26) zur zumindest teilweisen Abdeckung des Bearbeitungsabschnitts (20) des Sägeblattes (14) um eine Schwenkachse (28) verschwenkbar gelagert ist von einer mit ihrem freien Ende (30) einen Schnittbereich (36) des Zahnkranzes (18) des Bearbeitungsabschnitts (20) des Sägeblattes (14) im wesentlichen vollständig abdeckenden Ruhestellung in eine Betriebsstellung, bei der ein Schnittbereich (36) des Zahnkranzes (18) des Bearbeitungsabschnitts (20) des Sägeblattes (14) zur Bearbeitung eines Werkstücks unabgedeckt ist, **dadurch gekennzeichnet, dass** in der Ruhestellung ein Bereich (40) des freien Endes (30) der Schutzhaube (26) in eine korrespondierende Aussparung (44) im Arbeitstisch eingreift.

2. Tischkreissäge nach Anspruch 1, **dadurch gekennzeichnet, dass** die Schutzhaube (26) einteilig ausgebildet ist.

3. Tischkreissäge nach Anspruch 1, **dadurch gekennzeichnet, dass** die Schutzhaube (26) zweiteilig ausgebildet ist, wobei ein erster Teil (50) verschwenkbar am Spaltkeil (22) gelagert ist und der zweite Teil (52) um eine parallel zur Verschwenkachse (28) des ersten Teil (50) verlaufende Achse (54) am freien Ende des ersten Teils (50) der Schutzhaube (26) verschwenkbar ist, wobei der Bereich (40) der in der Ruhestellung in den Arbeitstisch (10) eingreift am ersten (50) und/oder am zweiten Teil (52) der Schutzhaube (26) vorgesehen sein kann.

4. Tischkreissäge nach einem der Ansprüche 1 bis 3, **dadurch gekennzeichnet, dass** an der Schutzhaube (26) eine Staubabsaugeinrichtung (38) angebracht ist.

5. Tischkreissäge nach einem der vorangehenden Ansprüche, **dadurch gekennzeichnet, dass** die Schutzhaube (26) in Richtung des Schnittbereichs (36) des Zahnkranzes (18) über das Sägeblatt (44) hinausragt.

6. Tischkreissäge nach einem der vorangehenden Ansprüche, **dadurch gekennzeichnet, dass** die Schutzhaube (26) zumindest teilweise aus Kunststoff besteht und vorzugsweise zumindest teilweise transparent ist.

7. Tischkreissäge nach einem der vorangehenden Ansprüche, **dadurch gekennzeichnet, dass** die Schutzhaube (26) an ihrem freien Ende (30) eine Anlaufschräge (32) aufweist.

8. Tischkreissäge nach einem der vorangehenden Ansprüche, **dadurch gekennzeichnet, dass** sich die Schutzhaube (26) oder die Teile (50, 52) der Schutzhaube (26) ausgehend von ihrem freien Ende (50) zu ihrem gelagerten Ende hin verjüngen.

9. Tischkreissäge nach einem der vorangehenden Ansprüche, **dadurch gekennzeichnet, dass** das Sägeblatt (14) relativ zum Arbeitstisch (10) in der Höhe und/oder der Neigung verstellbar ist.

10. Tischkreissäge nach einem der vorangehenden Ansprüche, **dadurch gekennzeichnet, dass** die Schutzhaube (26) am Spaltkeil (22) in einem Bereich oberhalb des Sägeblattes (14) angebracht ist.

11. Tischkreissäge nach einem der vorangehenden Ansprüche, **dadurch gekennzeichnet, dass** die Schutzhaube (26) selbsttätig von der Betriebs- in die Ruhestellung zurückkehrt.

## Claims

1. Circular saw bench having a workbench (10), a rotatably driven saw blade (14) with a toothed rim (18), which is mounted below the workbench (10), and wherein a machining section (20) of the saw blade (14) engages with the workbench (10), and having a riving knife (22), which is arranged on the workbench (10) and on which a protective cover (26) is swivelably mounted about a swivel axis (28) for at least partial covering of the machining section (20) of the saw blade (14) from a non-operating position substantially completely covering with its free end (30) a cutting region (36) of the toothed rim (18) of the machining section (20) of the saw blade (14) into an operating position, in which a cutting region (36) of the toothed rim (18) of the machining section (20) of the saw blade (14) is uncovered for machining a workpiece, **characterised in that** in the non-operating position a region (40) of the free end (30) of the protective cover (26) engages with a corresponding recess (44) in the workbench.

2. Circular saw bench according to Claim 1, **characterised in that** the protective cover (26) is of one-piece design.

3. Circular saw bench according to Claim 1, **characterised in that** the protective cover (26) is of two-piece design, wherein a first part (50) is swivelably mounted on the riving knife (22) and the second part (52) is swivelable about an axis (54) on the free end of the first part (50) of the protective cover (26), which axis (54) runs parallel to the swivel axis (28) of the first part (50) wherein the region (40), which engages with the workbench (10) in the non-operating position can be provided on the first part (50) and/or second part (52) of the protective cover (26).

4. Circular saw bench according to any one of Claims 1 to 3, **characterised in that** a dust removal device (38) is fixed to the protective cover (26).

5. Circular saw bench according to any one of the preceding claims, **characterised in that** the protective cover (26) projects beyond the saw blade (44) in the direction of the cutting region (36) of the toothed rim (18).

6. Circular saw bench according to any one of the preceding claims, **characterised in that** the protective cover (26) at least partially consists of plastic and preferably is at least partially transparent.

7. Circular saw bench according to any one of the preceding claims, **characterised in that** at its free end (30) the protective cover (26) has a run-on slope (32).

8. Circular saw bench according to any one of the preceding claims, **characterised in that** the protective cover (26) or the parts (50, 52) of the protective cover (26) taper starting from their free end (50) towards their mounted end.

9. Circular saw bench according to any of the preceding claims, **characterised in that** the saw blade (14) is displaceable in height and/or inclination relative to the workbench (10).

10. Circular saw bench according to any one of the preceding claims, **characterised in that** the protective cover (26) is fixed to the riving knife (22) in a region above the saw blade (14).

11. Circular saw bench according to any one of the preceding claims, **characterised in that** the protective cover (26) automatically reverts from the operating position back into the non-operating position.

## Revendications

1. Scie circulaire à table, comprenant une table de travail (10), une lame de scie (14) pouvant être entraînée en rotation, pourvue d'une couronne de dents (18) et tourillonnée au-dessous de la table de travail (10), et dans laquelle un segment travaillant (20) de la lame de scie (14) traverse la table de travail (10), ainsi qu'un coin de fente (22) qui est disposé sur la table de travail (10) et sur lequel un capot de protection (26) est monté pivotant autour d'un axe de pivotement (28) pour recouvrir au moins partiellement le segment travaillant (20) de la lame de scie (14), en passant d'une position de repos qui recouvre sensiblement entièrement par son extrémité libre (30) une zone de coupe (36) de la couronne de dents (18) du segment travaillant (20) de la lame de scie (14), à une position de fonctionnement dans laquelle une zone de coupe (36) de la couronne de dents (18) du segment travaillant (20) de la lame de scie (14) est découverte pour le travail d'une pièce, **caractérisée en ce que**, dans la position de repos, une zone (40) de l'extrémité libre (30) du capot de protection (26) s'engage dans un évidement correspondant (44) de la table de travail.

2. Scie circulaire à table selon la revendication 1, **caractérisée en ce que** le capot de protection (26) est d'une seule pièce.

3. Scie circulaire à table selon la revendication 1, **caractérisée en ce que** le capot de protection (26) est en deux parties, une première partie (50) étant montée pivotante sur le coin de fente (22) et la seconde partie (52) pouvant pivoter autour d'un axe (54) qui s'étend parallèlement à l'axe de pivotement (28) de la première partie (50) placé à l'extrémité libre de la première partie (50) du capot de protection (26), la zone (40) qui s'engage dans la table de travail (10) dans la position de repos pouvant être prévue sur la première partie (50) et/ou sur la seconde partie (52) du capot de protection (26).

4. Scie circulaire à table selon l'une des revendications 1 à 3, **caractérisée en ce qu'**un dispositif d'aspiration des poussières (38) est fixé au capot de protection (26).

5. Scie circulaire à table selon l'une des revendications précédentes, **caractérisée en ce que** le capot de protection (26) fait saillie au-delà de la lame de scie (44) dans la direction de la zone de coupe (36) de la couronne de dents (18).

6. Scie circulaire à table selon l'une des revendications précédentes, **caractérisée en ce que** le capot de protection (26) est au moins partiellement réalisé en matière plastique et est de préférence au moins partiellement transparent.

7. Scie circulaire à table selon l'une des revendications précédentes, **caractérisée en ce que** le capot de protection (26) comporte un chanfrein d'entrée (32) à son extrémité libre (30).

8. Scie circulaire à table selon l'une des revendications précédentes, **caractérisée en ce que** le capot de protection (26), ou les parties (50, 52) du capot de protection (26), se rétrécit depuis son extrémité libre (50) vers son extrémité de montage.

9. Scie circulaire à table selon l'une des revendications précédentes, **caractérisée en ce que** la lame de scie (14) est réglable en hauteur et/ou en inclinaison par rapport à la table de travail (10).

10. Scie circulaire à table selon l'une des revendications précédentes, **caractérisée en ce que** le capot de protection (26) est monté sur le coin de fente (22) dans une zone située au-dessus de la lame de scie (14).

11. Scie circulaire à table selon l'une des revendications précédentes, **caractérisée en ce que** le capot de protection (26) revient automatiquement de la position de travail à la position de repos.
